# NEUE EUROPÄISCHE PATENTSCHRIFT

(11) **EP 3 753 825 B2**
(45) Veröffentlichungstag und Bekanntmachung des Hinweises auf die Entscheidung über den Einspruch: **18.12.2024**
(45) Hinweis auf die Patenterteilung: 26.01.2022
(21) Anmeldenummer: 20178916.1
(22) Anmeldetag: 09.06.2020
(51) Int. Cl.: B62J 11/00, B62J 45/20, B62J 50/20, B62K 21/12

(54) **VORRICHTUNG ZUR DREHMOMENTFESTEN VERBINDUNG EINES FAHRZEUGLENKERS MIT EINEM GABELSCHAFT**
DEVICE FOR CONNECTING IN A TORQUE-RESISTANT MANNER A HANDLEBAR WITH A HANDLEBAR STEM
DISPOSITIF DE RACCORDEMENT FIXE EN ROTATION D'UN GUIDON AVEC UN FOURCHE

(30) Priorität: 19.06.2019 DE 202019103437 U
(43) Veröffentlichungstag der Anmeldung: 23.12.2020
(73) Patentinhaber: ZEG Zweirad-Einkaufs-Genossenschaft eG, 50739 Köln (DE)
(72) Erfinder: Honkomp, Georg, 53227 Bonn (DE)
(74) Vertreter: Patentanwälte Buschhoff Hennicke Althaus

(56) Entgegenhaltungen:
- EP-A1- 2 703 274
- CN-Y- 2 889 872

## Beschreibung

Die Erfindung betrifft eine Vorrichtung zur drehmomentfesten Verbindung eines Fahrzeuglenkers mit einem Gabelschaft eines zwei- oder dreirädrigen, insbesondere muskelbetätigten Fahrzeugs, insbesondere eines Fahrrads, mit einem mindestens eine Klemmeinrichtung aufweisenden Lenkervorbau, wobei die Klemmeinrichtung zur Einspannung eines zylindrischen Abschnitts des Fahrradlenkers eine an einem Vorbaugrundkörper ausgebildete, im Querschnitt etwa halbkreisförmige Aufnahmeschale sowie ein gegen die Aufnahmeschale anstellbares Klemmstück mit ebenfalls etwa halbkreisförmigen Querschnitt aufweist.

Derartige Verbindungsvorrichtungen zwischen Lenker und Gabelschaft sind bei den meisten modernen Fahrrädern zu finden. Der Lenkervorbau kann dabei mit einem fest am Vorbaugrundkörper angeordneten Schaftende koaxial in den rohrförmigen Gabelschaft eingesteckt und in gewünschter Tiefenposition mittels eines Klemmkonus fixiert sein. Eine im Allgemeinen stabilere Verbindung bildet die sogenannte Ahead-Set Anordnung, bei der der Vorbau außen am oben aus dem Steuerrohr des Fahrradrahmens herausragenden Gabelschaftende angeklemmt ist, derart, dass der Vorbaugrundkörper vom Gabelschaft in Fahrtrichtung nach vorne vorragt. An seinem vorderen Ende ist der Vorbaugrundkörper mit der Klemmeinrichtung zur Montage des Lenkers versehen. Es ist für eine derartige Vorrichtung auch bekannt, den Vorbau an seinem hinteren, am Gabelschaft angeklemmten Bereich in seiner Neigung verstellbar auszugestalten, wozu zwischen dem Vorbaugrundkörper und einer Gabelklemmeinrichtung ein blockierbares Schwenkgelenk mit zwei Schwenklagern vorgesehen ist. Diese Schwenklager können im Wesentlichen aus zwei seitlich an der Gabelklemmeinrichtung vorkragenden, rohrförmigen Ansätzen und einer Klemmeinrichtung mit zwei die Ansätze umschließenden, mit Schrauben verspannbaren Haltebügeln bestehen, die zur Veränderung der Vorbauneigung gelöst und in gewünschter, neuer Position wieder arretiert werden können (DE 201 21 831 U1).

Das Dokument CN2889872Y zeigt Merkmale des unabhängigen Anspruchs 1. Aus dem Katalog "Supernova Lighting Systems 2016" ist eine Vorrichtung bekannt, bei der eine Montageschelle für eine Fahrradlampe im Freiraum zwischen den beiden Halbschalen der Aufnahmeschale sowie zwischen den Klemmbügeln der Montageschelle so angeordnet sein kann, dass sie den dort liegenden zylindrischen Abschnitt des Fahrradlenkers umfasst.

Die Ausgestaltung der Lenkerbefestigung mit einer etwa halbkreisförmigen Aufnahmeschale am Grundkörper und mit einem ebenfalls im Querschnitt etwa halbkreisförmigen Klemmstück, das mit Schrauben gegen die Aufnahmeschale anstellbar ist, wobei der mittlere zylindrische Abschnitt des Lenkers zwischen den beiden Komponenten der Klemmeinrichtung eingeklemmt und hierdurch relativ zur Fahrzeuggabel drehmomentfest arretiert wird, hat den Vorteil, dass der Lenker vom Vorbau demontiert werden kann, ohne dass hierfür Anbauteile wie Brems- oder Schaltgriffe, Griffüberzüge, Klingel o.dgl. abgebaut werden müssen. Zur Montage von Fahrzeugzubehörteilen wie z.B. einem Fahrradtacho, einer Fahrradlampe o.dgl. ist es bekannt, an dem Lenker eine für das jeweilige Zubehörteil geeignete Montageschelle anzubringen, an der das Zubehörteil dann entweder fest angeschlossen ist oder mit einem geeigneten Schnellverschluss befestigt werden kann. Es ist dabei oft gewünscht, das Zubehörteil möglichst an zentraler Stelle anzuordnen, also dort, wo z.B. ein Fahrradcomputer am besten im Blickfeld des Fahrers ist und eine Fahrradlampe den Fahrweg am besten ausleuchtet. Eine genau zentrische Anordnung am Fahrradlenker ist mit den bestehenden Verbindungssystemen allerdings bislang nicht ohne weiteres möglich, da an dieser Stelle die Klemmeinrichtung am vorderen Ende des Lenkervorbaus den zentralen, zylindrischen Abschnitt des Lenkers umschließt.

Aufgabe der Erfindung ist es, eine Vorrichtung der eingangs genannten Art zu schaffen, bei der zwei Montageschellen für Fahrzeugzubehörelemente an möglichst zentraler Position unmittelbar am Fahrzeuglenker montiert werden können.

Diese Aufgabe wird mit der Erfindung durch eine Vorrichtung gemäß Patentanspruch 1 gelöst.

Die erfindungsgemäße Lösung erlaubt es, zwischen den beiden im Abstand voneinander am Lenker angreifenden Klemmbügeln und den damit zusammenwirkenden Halbschalen am Vorbaugrundkörper genau zentrisch mehrere Montageschellen für einen Fahrradtacho, eine Fahrradlampe oder ein anderes Zubehörelement zu montieren, denn der zwischen den Halbschalen ausgebildete, den zylindrischen Abschnitt des Lenkers nicht kontaktierende Freiraum bewirkt, dass der Lenker in diesem zylindrischen Abschnitt über seinen Umfang frei bleibt, die Befestigung der Schellen also nicht von der Klemmeinrichtung des Vorbaus behindert wird. Der Gestaltung liegt die Erkenntnis zugrunde, dass die mitunter großen, von der Klemmeinrichtung zwischen Lenker und Vorbau zu übertragenden Querkräfte und Biegemomente in den seitlich äußersten Bereichen der Klemmverbindung am besten übertragen werden und der zwischen den beiden Halbschalen bzw. den beiden Klemmbügeln liegende Bereich somit frei bleiben kann, ohne dass dies die Übertragung der Kräfte und Momente nennenswert beeinflusst. In einer ersten, vorteilhaften Ausführungsform der Erfindung kann die Anordnung so getroffen sein, dass die zwei Klemmbügel mittels mindestens einer, vorzugsweise in der Nähe des einen Endbereichs der Bügel angeschlossenen Verbindungsbrücke miteinander verbunden sind, die im Klemmzustand für den Durchlass der zwei Montageschellen im Radialabstand zu dem zylindrischen Abschnitt ist. Die Verbindungsbrücke fasst die beiden Klemmbügel zu einem gemeinsamen Bauteil zusammen, was die Montage am Lenker erleichtern kann. Da sich der Klemmbügel im Radialabstand vom Lenker befindet, können die Montageschellen ohne Probleme zwischen diesem und dem Bügel hindurch fassen.

Alternativ ist es natürlich auch möglich, dass die Klemmbügel als voneinander separate, unverbundene Teile ausgeführt sind.

Die Abmessung des Freiraums zwischen den beiden Halbschalen voneinander ist vorzugsweise an eine Breite der den zylindrischen Abschnitt umfassenden Montageschellen bzw. an eine Gesamtbreite der in dem Freiraum anzuordnenden Bauelemente (Schellenbänder, Distanzringe o.dgl.) angepasst. Sollen die zwei oder sogar drei Montageschellen zwischen den Halbschalen an zentraler Stelle am Lenker angeordnet werden, ist zweckmäßig deren Gesamtbreite, also die Summe der Breiten der einzelnen Schellen so bemessen, dass sie zwar ohne Zwang, aber auch nicht mit übermäßig viel Spiel zwischen die Halbschalen und die damit vorzugsweise mit Schrauben verspannten Klemmbügel passen. Die Anordnung ist erfindungsgemäß so getroffen, dass der zylindrische Abschnitt in dem Freiraum zwischen den beiden Halbschalen sowie zwischen den beiden Klemmbügeln von den Montageschellen für jeweils mindestens ein Fahrzeugzubehörelement vorzugsweise über die gesamte zur Verfügung stehende Freiraumabmessung umfasst ist.

Bei den zwei Fahrzeugzubehörelementen, die mittels der Erfindung an zentraler Stelle am Lenker montiert werden können, kann es sich beispielsweise um Elemente aus der Gruppe Fahrradcomputer, Fahrradlampe, Lenkertaschenbefestigung, Schalthebel, Mobiltelefon und/oder GPS-Navigationsgerät handeln.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert wird. Es zeigt:
Fig. 1 eine erfindungsgemäße Vorrichtung ohne Montageschelle in einer perspektivischen Darstellung;
Fig. 2 die Vorrichtung mit einer Montageschelle in perspektivischer Darstellung;
Fig. 3 den Gegenstand der Fig. 1 in einer Vorderansicht;
Fig. 4 der Gegenstand der Fig. 1 in einem Schnitt längs der Linie X-X in Fig. 3; und
Fig. 5 A, B zwei Montageschellen, die bei der erfindungsgemäßen Vorrichtung in Kombination zum Einsatz gelangen können, in perspektivischen Darstellungen.

In der Zeichnung ist mit 10 in ihrer Gesamtheit eine Vorrichtung zur drehmomentfesten Verbindung eines Fahrradlenkers 11 mit dem Gabelschaft 12 eines nicht weiter dargestellten Fahrrads bezeichnet. Zentraler Bestandteil der Vorrichtung ist ein Lenkervorbau 13, der an seinem einen, in Fahrtrichtung hinteren Ende 14 in nicht weiter im Detail dargestellter, bekannter Weise am oberen Ende des Gabelschafts 12 festgelegt ist. An seinem vorderen Ende 15 ist der Lenkervorbau 13 mit einer Klemmeinrichtung 16 versehen, die zur Einspannung eines zentralen, zylindrischen Abschnitts 17 des Fahrradlenkers 11 dient.

Die Klemmeinrichtung 16 hat eine an einem Grundkörper 18 des Vorbaus 13 ausgebildete Aufnahmeschale 19 sowie ein aus zwei Klemmbügeln 20 bestehendes Klemmstück, wobei sowohl die Aufnahmeschale 19 als auch die beiden Klemmbügel 20 an ihren mit dem Mittelteil 17 des Fahrradlenkers 11 zusammenwirkenden Innenseiten jeweils einen etwa halbkreisförmigen Querschnitt aufweisen und damit an den Außenquerschnitt des Lenkers angepasst sind. Die beiden Klemmbügel 20 sind mit dem Grundkörper 18 des Vorbaus 13 mit insgesamt vier versenkten Schrauben, beispielsweise Innensechskantschrauben verbunden, wobei der mittlere, zylindrische Abschnitt 17 des Fahrradlenkers 11 zwischen den Innenseiten der Aufnahmeschale 19 und der beiden Klemmbügel 20 fest eingespannt ist, wie dies bekannt ist.

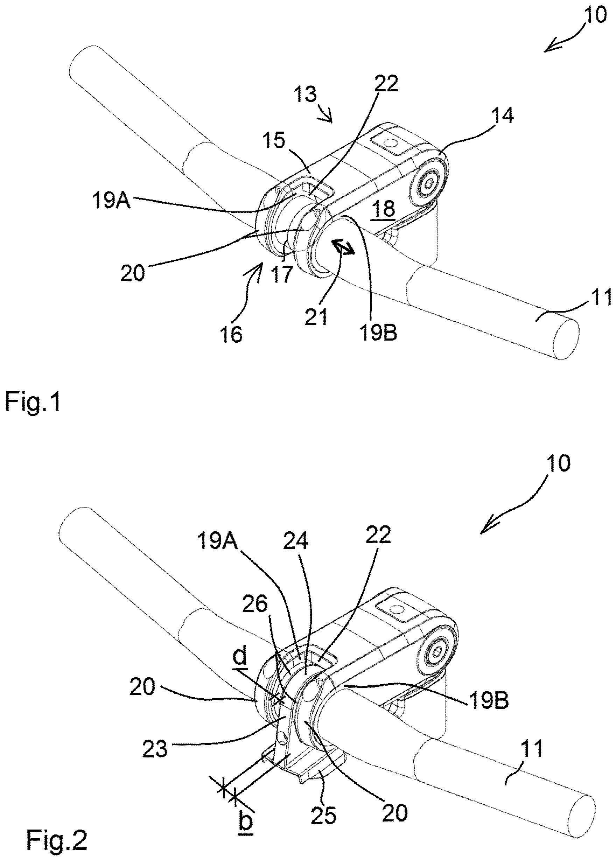

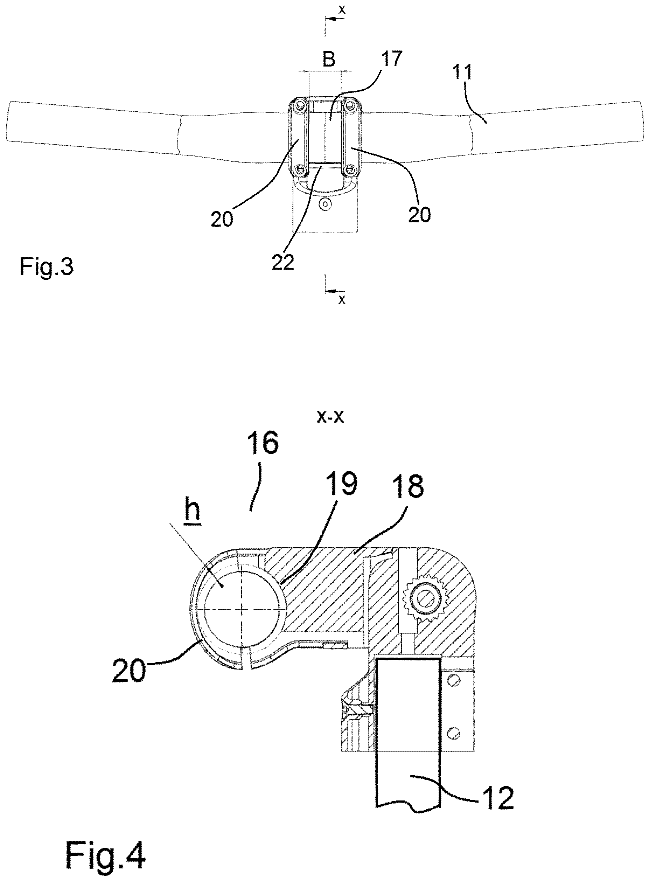

Man erkennt, dass die beiden Klemmbügel 20 in Achsrichtung 21 des zylindrischen Abschnitts 17 in einem Abstand B voneinander angeordnet sind, der bei dem gezeigten, bevorzugten Ausführungsbeispiel größer ist als 15 mm, zum Beispiel 20,5 mm betragen kann. In ähnlicher Weise ist erfindungsgemäß vorgesehen, dass die Aufnahmeschale 19 von zwei voneinander beanstandeten Halbschalen 19A, 19B gebildet wird, so, dass der zylindrische, mittlere Abschnitt 17 des Lenkers 11 nur an seinen rechts-und linksseitigen äußeren Bereichen von den beiden Halbschalen 19 A, 19 B und den jeweils zugeordneten Klemmbügeln 20 umschlossen wird, während sich zwischen den Halbschalen und Klemmbügel ein Freiraum 22 ausbildet, in welchem der zylindrische Abschnitt im Klemmzustand des Lenkers nicht von der Klemmeinrichtung kontaktiert wird, sondern zumindest im Wesentlichen über den gesamten Umfang mit einer lichten Höhe h von wenigstens ca. 3 mm frei zugänglich bleibt, wie man dies in den Fig. 1, 3 und insbesondere Fig. 4 gut erkennen kann.

Wendet man sich nunmehr der Fig. 2 zu, wird der besondere Vorteil der Konstruktion deutlich. Man erkennt, dass in dem zentralen Bereich zwischen den beiden Halbschalen 19 A,B und den damit verbundenen Klemmbügeln 20 aufgrund des dort über den gesamten Umfang des Lenkers 11 vorgesehenen Freiraums 22 ausreichend Platz für mindestens eine Montageschelle 23 geschaffen ist, die mit einem Schellenband 24 den Lenker 11 genau in seiner Mitte zwischen den beiden Klemmbügeln 20 und damit verbundenen Halbschalen 19A, 19B umschlingt und an der ein (nicht näher dargestelltes) Fahrzeugzubehörelement an einem Befestigungsschuh 25 angesteckt werden kann, beispielsweise eine Fahrradlampe. Bei dem gezeigten Ausführungsbeispiel ist die Breite b des Schellenbands 24 der Montageschelle 23 kleiner als die Abmessung B des Freiraums 22 zwischen den beiden Halbschalen 19 A,B und es sind rechts- und linksseitig des Schellenbands 24 auf den Lenker 11 Distanzringe 26 aufgesteckt, deren Dicke d so gewählt ist, dass die Gesamtbreite des Schellenbands der Montageschelle und der beiden Distanzringe (b+2*d) nur geringfügig kleiner (im Ausführungsbeispiel 20 mm) ist als die Breitenabmessung B des Freiraums 22, so dass die Montageschelle zentriert in der Mitte zwischen den beiden Halbschalen und den damit verbundenen Klemmbügeln platziert ist.

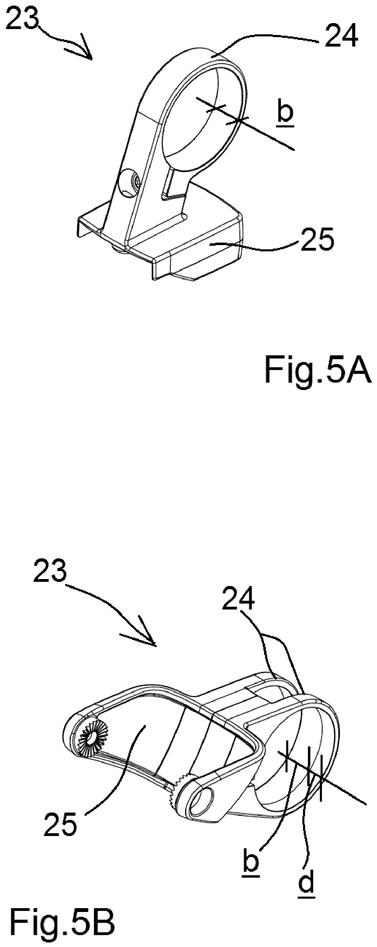

Die Figuren 5A und 5B zeigen zwei verschiedene Versionen von Montageschellen, wie sie bei der erfindungsgemäßen Vorrichtung zum Einsatz kommen können. Die Schelle gemäß Fig. 5A ist in der Fig. 2 im am Lenker montierten Zustand wie vorstehend beschrieben dargestellt. Die Montageschelle gemäß Fig. 5B ist mit doppelten Schellenbändern versehen, die in einem Abstand voneinander liegen, der der Breite des Schellenbands der Schelle nach Fig. 5A entspricht. Somit besteht die Möglichkeit, in dem Freiraum 22 nicht nur eine einzelne Montageschelle anzuordnen, wie dies in Fig. 2 gezeigt ist, sondern eine Kombination aus zwei Montageschellen gemäß Fig. 5A und Fig. 5B, wobei die in Zwillingsanordnung vorgesehenen Schellenbänder der Schellen gemäß Fig. 5B nicht nur die Halterung für das jeweilige Fahrzeugzusatzteil tragen, sondern zusätzlich auch die Funktion von Distanzstücken mit einer Dicke d übernehmen, die das einzelne, schmale Schellenband des Halters gemäß Fig. 5A zwischen sich zentrieren. Die Anordnung mit zwei Montageschellen gestattet das Anbringen von zwei verschiedenen Fahrzeugzubehörelementen genau zentral in der Mitte des Lenkers, wobei dann vorzugsweise eines der Zubehörelemente oberhalb des Vorbaus 13 und das andere unterhalb des Vorbaus angeordnet ist.

### Bezugszeichenliste

- 10: Vorrichtung
- 11: Fahrradlenker
- 12: Gabelschaft
- 13: Lenkervorbau
- 14: hinteres Ende von 13
- 15: vorderes Ende von 13
- 16: Klemmeinrichtung
- 17: zylindrischer Abschnitt von 11
- 18: Grundkörper
- 19: Aufnahmeschale A,B
- 20: Klemmbügel
- 21: Achsrichtung
- 22: Freiraum
- h: lichte Höhe
- 23: Montageschelle
- 24: Schellenband
- b: Breite Schellenband,
- B: Breite Freiraum
- 25: Befestigungsschuh
- 26: Distanzringe
- d: Dicke von 26

## Patentansprüche

1. Vorrichtung zur drehmomentfesten Verbindung eines Fahrzeuglenkers (11) mit einem Gabelschaft (12) eines zwei- oder dreirädrigen, insbesondere muskelbetätigten Fahrzeugs, insbesondere eines Fahrrads, mit einem mindestens eine Klemmeinrichtung (16) aufweisenden Lenkervorbau (13), wobei die Klemmeinrichtung (16) zur Einspannung eines zylindrischen Abschnitts (17) des Fahrradlenkers (11) eine an einem Vorbaugrundkörper (18) ausgebildete, im Querschnitt etwa halbkreisförmige Aufnahmeschale (19) sowie ein gegen die Aufnahmeschale anstellbares Klemmstück mit ebenfalls etwa halbkreisförmigen Querschnitt aufweist, wobei das Klemmstück zwei in Achsrichtung (21) des zylindrischen Abschnitts (17) voneinander beanstandete Klemmbügel (20) aufweist oder von diesen gebildet wird, **wobei** die Aufnahmeschale (19) von zwei entsprechend dem Abstand der Klemmbügel (20) voneinander beanstandeten Halbschalen (19A, 19B) gebildet wird, zwischen denen ein den zylindrischen Abschnitt (17) im Klemmzustand nicht kontaktierender Freiraum (22) ausgebildet ist, in dem eine Kombination von zwei den zylindrischen Abschnitt (17) wenigstens teilweise umschließenden Montageschellen (23) für zwei Fahrzeugzubehörelemente so aufgenommen ist, dass der zylindrische Abschnitt (17) in dem Freiraum (22) zwischen den beiden Halbschalen (19A,B) sowie zwischen den beiden Klemmbügeln (20) von der Kombination der beiden Montageschellen (23) für die Fahrzeugzubehörelemente umfasst ist, wobei eine erste der beiden Montageschellen mit einem einzelnen, schmalen Schellenband und eine zweite der beiden Montageschellen mit doppelten, in Zwillingsanordnung vorgesehenen Schellenbändern versehen ist, die in einem Abstand voneinander liegen, der der Breite des einzelnen schmalen Schellenbands der ersten Montageschelle entspricht, wobei die in Zwillingsanordnung vorgesehenen Schellenbänder der zweiten Montageschelle die Funktion von Distanzstücken mit einer Dicke (d) übernehmen, die das einzelne, schmale Schellenband der ersten Montageschelle zwischen sich zentrieren.

2. Vorrichtung nach Anspruch 1, **dadurch gekennzeichnet, dass** die zwei Klemmbügel (20) mittels mindestens einer, vorzugsweise in der Nähe des einen Endbereichs der Bügel angeschlossenen Verbindungsbrücke miteinander verbunden sind, die im Klemmzustand für den Durchlass der Montageschellen (23) im Radialabstand zu dem zylindrischen Abschnitt (17) ist.

3. Vorrichtung nach Anspruch 1, **dadurch gekennzeichnet, dass** die Klemmbügel (20) als voneinander separate, unverbundene Teile ausgeführt sind.

4. Vorrichtung nach einem der Ansprüche 1 bis 3, **dadurch gekennzeichnet, dass** die Abmessung (B) des Freiraums (22) zwischen den beiden Halbschalen (19A,B) voneinander an eine Breite (b+2d) der den zylindrischen Abschnitt (17) umfassenden Montageschellen (23) angepasst ist.

5. Vorrichtung nach einem der Ansprüche 1 bis 4, **dadurch gekennzeichnet, dass** die beiden Fahrzeugzubehörelemente Elemente aus der Gruppe Fahrradcomputer, Fahrradlampe, Lenkertaschenbefestigung, Schalthebel, Mobiltelefon und/oder GPS-Navigationsgerät sind.

## Claims

1. Device for torque-resistant connection of a vehicle handlebar (11) to a fork shaft (12) of a two- or three-wheeled, in particular muscle-operated, vehicle, in particular a bicycle, comprising a handlebar stem (13) having at least one clamping device (16), and a mounting clamp (23) for at least one vehicle accessory element, wherein the clamping device (16) has, for clamping a cylindrical portion (17) of the bicycle handlebar (11), a receiving cup (19) formed on a stem body (18) and having an approximately semi-circular cross-section, as well as a clamping piece which can be placed against the receiving cup and likewise has an approximately semi-circular cross-section, wherein the clamping piece has or is formed by two clamping brackets (20) that are spaced apart from one another in the axial direction (21) of the cylindrical portion (17), **wherein** the receiving cup (19) is formed of two half-cups (19A, 19B) that are spaced apart from one another in accordance with the spacing of the clamping brackets (20) and between which a free space (22) is formed that in the clamping state does not contact the cylindrical portion (17), in which free space a combination of two mounting clamps (23) for two vehicle accessory elements, which at least partially surround the cylindrical portion (17), is accommodated in such a way that, in the free space (22) between the two half-cups (19A, B) and between the two clamping brackets (20), the cylindrical portion (17) is enclosed by the combination of the two mounting clamps (23) for the vehicle accessory elements, wherein a first of the two mounting clamps is provided with a single, narrow clamp band and a second of the two mounting clamps is provided with double clamp bands provided in a twin arrangement, which are at a distance from one another which corresponds to the width of the single, narrow clamp band of the first mounting clamp, wherein the clamp bands of the second mounting clamp provided in the twin arrangement assume the function of spacers with a thickness (d) and which centre the single, narrow clamp band of the first mounting clamp between them.

2. Device according to claim 1, **characterised in that** the two clamping brackets (20) are connected to each other by means of at least one connecting bridge, preferably attached in the vicinity of one end region of the brackets, which connecting bridge is, in the clamping state and for the passage of the mounting clamps (23), radially spaced from the cylindrical portion (17).

3. Device according to claim 1, **characterised in that** the clamping brackets (20) are configured as parts that are separate from one another and are unconnected.

4. Device according to any one of claims 1 to 3, **characterised in that** the dimension (B) of the free space (22) between the two half-shells (19A,B) from each other matches a width (b+2d) of the mounting clamps (23) enclosing the cylindrical portion (17).

5. Device according to any one of claims 1 to 4, **characterised in that** the two vehicle accessory elements are elements from the group consisting of a bicycle computer, bicycle lamp, handlebar bag attachment, gear lever, mobile telephone and/or GPS navigation device.

## Revendications

1. Dispositif pour la connexion résistant au couple d'un guidon de véhicule (11) avec une fourche (12) d'un véhicule à deux ou trois roues, en particulier à propulsion musculaire, en particulier d'une bicyclette, comprenant une potence de guidon (13) présentant au moins un appareil de serrage (16) et un collier de montage (23) pour au moins un élément d'accessoire de véhicule, dans lequel le dispositif de serrage (16) présente une coque de réception (19) réalisée sur un corps de base (18) avec une section transversale approximativement semi-circulaire pour le serrage d'une section cylindrique (17) du guidon de bicyclette (11) ainsi qu'une pièce de serrage pouvant être appliquée contre la coque de réception également avec une section transversale approximativement semi-circulaire, dans lequel la pièce de serrage présente deux étriers de serrage (20) espacés l'un de l'autre dans la direction axiale (21) de la section cylindrique (17) ou est formée par ceux-ci, **dans lequel** la coque de réception (19) est formée par deux demi-coques (19A, 19B) espacées l'une de l'autre conformément à l'espacement des étriers de serrage (20), entre lesquelles un espace libre (22) n'entrant pas en contact avec la section cylindrique (17) à l'état de serrage est réalisé, dans lequel espace libre une combinaison de deux colliers de montage (23) pour deux éléments d'accessoire de véhicule entourant au moins partiellement la section cylindrique (17) est logé de sorte que la section cylindrique (17) est entourée par la combinaison des deux colliers de montage (23) pour les éléments d'accessoire de véhicule dans l'espace libre (22) entre les deux demi-coques (19A, B) et entre les deux étriers de serrage (20), dans lequel sont disposés un premier des deux colliers de montage avec une bande de collier unique, étroite et un second des deux colliers de montage avec des doubles bandes de collier jumelées, bandes qui se trouvent l'une l'autre à une distance qui correspond à la largeur de la bande de collier unique, étroite du premier collier de montage, dans lequel les bandes de collier jumelées du deuxième collier de montage assument la fonction de pièces d'écartement avec une épaisseur (d), pièces qui centrent entre elles la bande de collier unique, étroite du premier collier de montage.

2. Dispositif selon la revendication 1, **caractérisé en ce que** les deux étriers de serrage (20) sont connectés l'un à l'autre par au moins un pont de connexion, de préférence raccordé à proximité d'une zone d'extrémité des étriers, lequel pont de connexion se trouve à l'état de serrage et pour le passage des colliers de montage (23) à distance radiale de la section cylindrique (17).

3. Dispositif selon la revendication 1, **caractérisé en ce que** les étriers de serrage (20) sont configurés en tant que parties qui sont séparées les unes des autres et ne sont pas connectées.

4. Dispositif selon l'une quelconque des revendications 1 à 3, **caractérisé en ce que** les dimensions (B) de l'espace libre (22) entre les deux demi-coques (19A,B) l'une par rapport à l'autre sont adaptées à une largeur (b+2d) des colliers de montage (23) entourant la section cylindrique (17).

5. Dispositif selon l'une quelconque des revendications 1 à 4, **caractérisé en ce que** les deux éléments d'accessoire de véhicule sont un élément du groupe constitué par un ordinateur de vélo, une lampe de vélo, une fixation de sacoche de guidon, un levier de vitesses, un téléphone mobile et/ou un appareil de navigation GPS.
